# EUROPÄISCHE PATENTSCHRIFT

(11) **EP 3 067 145 B1**
(45) Veröffentlichungstag und Bekanntmachung des Hinweises auf die Patenterteilung: **26.09.2018**
(21) Anmeldenummer: 16159738.0
(22) Anmeldetag: 10.03.2016
(51) Int. Cl.: B23K 101/06, B23K 101/10, B23K 37/02, B23K 31/02, B23K 9/028, B23K 9/025

(54) **ORBITALSCHWEISSVORRICHTUNG MIT EINSTELLBAREM FAHRWERK**
ORBITAL WELDING CARRIAGE WITH ADJUSTABLE CHASSIS.
CHARIOT POUR LE SOUDAGE ORBITAL COMPRENANT UN CHASSIS AJUSTABLE.

(30) Priorität: 11.03.2015 DE 102015003091; 11.03.2015 DE 102015003084
(43) Veröffentlichungstag der Anmeldung: 14.09.2016
(73) Patentinhaber: SPA Pipe Welding Solutions GmbH & Co. KG, 82194 Gröbenzell (DE)
(72) Erfinder: OESTE, Jens, 86368 Gersthofen (DE)
(74) Vertreter: Ascherl, Andreas

(56) Entgegenhaltungen:
- WO-A1-2011/062594
- US-A- 3 844 468
- US-A- 4 260 869
- US-A1- 2003 047 585

## Beschreibung

Die vorliegende Erfindung bezieht sich auf eine Orbitalschweißvorrichtung, gemäß dem Oberbegriff des Anspruchs 1 (see, for example, US 2003/0047585 A1).

Die vorliegende Erfindung liegt auf dem technischen Gebiet der Fügetechnik. Leitungen, insbesondere Leitungen zum Führen von Gasen, bestehen oftmals aus Rohren, insbesondere aus Metall, und werden je nach Anwendungsgebiet mittels Kleben, Löten oder Schweißen miteinander verbunden. Es werden insbesondere beim Onshore- oder Offshore-Schweißen von Pipelines (Gas- & Öl-Pipelines) Orbitalschweißsysteme (Bugs) genutzt, wobei das Schweißgerät auf einem Positionierband fährt, das um ein Rohr herum befestigt wird, und eine zwischen die einzelnen Rohre der Pipeline und die Rohre verbindende Schweißnaht mit einer oder mehreren Raupenlagen nebeneinander oder übereinander einbringt.

Die Druckschrift US 5,676,857 A offenbart ein System zum Verschweißen von Rohren, um eine lange, kontinuierliche Pipeline zu schaffen. Ein Schweißwagen bzw. ein Schweißbug ist an einer Führungsschiene, die sich um den Umfang des Rohres erstreckt, montiert. Der Schweißwagen ist mit einem Drahtvorschub, einem Motor, um den Drahtvorschub anzutreiben, und einem Antriebsmotor zum Bewegen des Bugs entlang der Führung ausgestattet. Die Geschwindigkeit des Bugs und des Drahtvorschubs ist variierbar, während der Bug kontinuierlich um das Rohr bewegt wird. Die erste Schweißnaht oder Wurzelschweißnaht wird gemäß dem Gegenstand der US 5,676,857 A von außerhalb des Rohres geschweißt. Der aus der US 5,676,857 A bekannte Bug wird dabei über einen fest installierten Stirnradantrieb angetrieben. Weiterhin weist der Bug einen Halterahmen zum Halten einer Spule zur Drahtaufnahme auf.

Eine weitere Orbitalschweißvorrichtung, die zum Verbinden von Metallrohren verwendet wird, ist durch die Druckschrift EP1100645B1 bekannt. Diese Druckschrift offenbart eine Vorrichtung zum Stumpfschweißen von Rohren oder von Bauteilen, wobei die Bauteile zumindest an den zu verschweißenden Enden flach oder rohrförmig sind oder einen Querschnitt in der Form von einem Kreisbogen haben, wobei die Vorrichtung aufweist: ein Führungselement, das eines der Enden der Rohre oder der Bauteile umgeben kann und daran befestigt werden kann, und einen Schlitten, der entlang des Führungselements bewegbar ist, wobei der Schlitten kraftgetriebene Einrichtungen, die dazu ausgestaltet sind, um den Schlitten entlang des Führungselements zu bewegen, einen Schweißbrenner, der in einer oszillierenden Weise relativ zu dem Schlitten in einer Richtung etwa parallel zu der Achse der zu verbindenden Rohre oder Bauteile bewegt werden kann, Einrichtungen, die dazu ausgestaltet sind, um den Schweißbrenner zu halten und ihn vertikal relativ zu dem Schlitten zu bewegen, Einrichtungen, um dem Schweißbrenner automatisch einen Schweißdraht zuzuführen, Bewegungseinrichtungen, die dazu ausgestaltet sind, die oszillierende Bewegung auf den Schweißbrenner aufzubringen, und elektronische Einrichtungen, um die Amplitude der Oszillation und/oder die Zeit zu regulieren, die der Schweißbrenner in einer oder in beiden Grenzpositionen der Oszillation verbleibt, wobei die Einrichtungen zum Halten des Schweißbrenners dazu ausgestaltet sind, diesen relativ zu dem Schlitten horizontal zu bewegen, dass die Vorrichtung Einrichtungen aufweist, die dazu ausgestaltet sind, ein Signal bezüglich der Winkelbewegung des Schweißbrenners während der Oszillation zu erzeugen, dass die Regulier-Einrichtungen Speichereinrichtungen, die dazu ausgestaltet sind, für zumindest einen der Schritte eines Schweißvorgangs eine Vielzahl von Werten, die sich zumindest auf die Frequenz und die Amplitude der Oszillation des Schweißbrenners beziehen, die für diesen Schritt des Schweißvorgangs gewünscht sind, sowie eine Start- und eine Stop-Position für die Schweißbrenner-Oszillation zu speichern, und Steuereinrichtungen aufweisen, die dazu ausgestaltet sind, die Einrichtungen zum Oszillieren des Schweißbrenners in Relation zu den gespeicherten Werten und den Signalen automatisch zu steuern, die durch die Einrichtungen zum Erfassen der Winkelbewegung des Schweißbrenners erzeugt werden.

Weiterhin offenbaren die Druckschriften US 5 932 123 A und US 4 132 338 A Schweißvorrichtungen.

Schweißvorrichtungen müssen definiert mit einem Führungsband in Kontakt gebracht werden, damit ein möglichst präziser Vorschub der Schweißvorrichtung entlang der Erstreckungsrichtung des Führungsbandes erfolgen kann. Die bekannten Anbindungen der Schweißvorrichtungen an Führungsbänder sind jedoch nachteilig, da sie aufgrund hoher Anpresskräfte fahrwerksseitig und/oder führungsbandseitig oftmals einen hohen Verschleiß bewirken. Ferner resultiert aus den hohen Anpresskräften ein Bedürfnis für eine starke Antriebseinrichtung, die wiederum viel Energie benötigt.

Es ist somit Aufgabe der vorliegenden Erfindung eine verbesserte Schweißvorrichtung bereitzustellen, die insbesondere einen oder mehrere Nachteile des Standes der Technik ausräumt.

Die zuvor genannte Aufgabe wird erfindungsgemäß durch eine Schweißvorrichtung gemäß Anspruch 1 gelöst. Die erfindungsgemäße Orbitalschweißvorrichtung umfasst dabei mindestens ein Fahrwerk zum Koppeln mit einem Führungsband, wobei das Fahrwerk einen ersten Fahrwerksteil und eine zweiten Fahrwerksteil umfasst, wobei der erste Fahrwerksteil und der zweite Fahrwerksteil orthogonal zur Transportrichtung voneinander beabstandet sind, wobei der erste Fahrwerksteil zwei Rädergruppen mit jeweils mehreren Rädern und der zweite Fahrwerksteil zwei Rädergruppen mit jeweils mehreren Rädern aufweist, wobei zumindest ein Rad jeder Rädergruppe jeweils an einem um eine Schwenkachse schwenkbaren Hebelelement angeordnet ist, wobei die Hebelelemente mit den jeweils daran angeordneten Rädern jeweils in mehreren Stellungen zum Anpassen des Fahrwerks an verschiedene Führungsbanddurchmesser ausrichtbar bzw. positionierbar sind. Diese Ausführungsform ist vorteilhaft, da das Fahrwerk derart gestaltet werden kann, dass allein durch das Zusammenwirken der einzelnen Räder der einzelnen Rädergruppen keine bzw. nur eine geringe Anpresskraft orthogonal zur Transportrichtung in ein Führungsband eingeleitet wird. Dies bedeutet, dass das Fahrwerk besonders bevorzugt derart gestaltet ist, dass es ausschließlich formschlüssig an dem Führungsband ankoppelbar ist, wodurch geringe oder keine Anpresskräfte auftreten.

Weitere bevorzugte Ausführungsformen sind Gegenstand der nachfolgenden Beschreibungsteile und/oder der Unteransprüche.

Gemäß einer bevorzugten Ausführungsform der vorliegenden Erfindung ist die Stellung der Hebelelemente jeweils stufenlos einstellbar und mittels Arretierungsmitteln in der jeweils eingestellten Ausrichtung arretierbar. Diese Ausführungsform ist vorteilhaft, da die erfindungsgemäße Schweißvorrichtung dadurch mit Führungsbändern mit unterschiedlichen Durchmessern koppelbar ist. Bevorzugt ist die Schweißvorrichtung mit Führungsbändern mit einem Durchmesser von 7 Zoll bis 60 Zoll, insbesondere mit einem Durchmesser von 10 Zoll bis 56 Zoll, koppelbar.

Gemäß einer weiteren bevorzugten Ausführungsform der vorliegenden Erfindung sind Positioniermittel, insbesondere Formschlusselemente, zum stufenartigen und formschlüssigen Positionieren der Hebelelemente in vorbestimmten Stellungen vorgesehen, wobei jedes Hebelelement zumindest in zwei voneinander verschiedenen Stellungen, insbesondere in drei oder mindestens drei voneinander verschiedenen Stellungen, positionierbar ist. Diese Ausführungsform ist vorteilhaft, da erkannt wurde, dass wenige Stellungen ausreichen, um für mehrere Führungsbanddurchmesser, insbesondere zwischen 10 Zoll und 56 Zoll, geeignete Radanordnungen bereitzustellen. Bevorzugt wird eine Stellung vorgesehen, in der die Schweißvorrichtung an einem sich horizontal erstreckenden Führungsband anordenbar ist. Weiterhin wird bevorzugt zusätzlich oder alternativ eine Stellung vorgesehen, in der die Schweißvorrichtung an einem Führungsband mit einem Durchmesser zwischen 10 Zoll und 24 Zoll anordenbar ist. Eine weitere bevorzugte Stellung dient zusätzlich oder alternativ bevorzugt zum Ankoppeln an ein Führungsband mit einem Durchmesser im Bereich zwischen 24 Zoll und 56 Zoll. Die unterschiedlichen Ausrichtungen werden bevorzugt durch formschlüssige Verbindungen bzw. Kopplungen zwischen dem jeweiligen Hebelelement und dem jeweiligen Fahrwerkteil geschaffen.

An jedem Hebelelement sind drei Räder angeordnet, wobei jeweils ein Rad zum Kontaktieren einer Stirnfläche des Führungsbandes, jeweils ein Rad zum Kontaktieren einer äußeren Oberfläche des Führungsbandes und jeweils ein Rad zum Kontaktieren der radial innenliegenden Oberfläche des Führungsbandes angeordnet ist. Dies ist vorteilhaft, da durch die mit der Stirnseite des Führungsbands in Kontakt tretenden Räder eine Umpositionierung der Schweißvorrichtung entlang dem Führungsband ohne die Gefahr eines Abgleitens der Schweißvorrichtung in zur Transportrichtung orthogonaler Richtung verhindert wird. Weiterhin schützen die Räder zum Kontaktieren der inneren Oberfläche des Führungsbandes die Schweißvorrichtung vor einem Herunterfallen der Schweißvorrichtung, wenn z.B. unterseitige Anteile (unterhalb der 3 Uhr und 9 Uhr Position) zweier Rohre miteinander verschweißt werden. Ferner dienen die Räder zum Kontaktieren einer äußeren Oberfläche des Führungsbandes zum reibungsarmen Bewegen der Schweißvorrichtung, wenn z.B. obere Anteile (oberhalb der 3 Uhr und 9 Uhr Position) zweier Rohre miteinander verschweißt werden.

Die Räder jeder Rädergruppe sind jeweils an einem Ausrichtungselement angeordnet, wobei das Ausrichtungselement schwenkbar an dem Grundkörper des Hebelelements angeordnet ist. Dies ist vorteilhaft, da neben der Einstellbewegungen der Grundkörper der Hebelelemente ebenfalls jeweils eine weitere, insbesondere in ihrer maximalen Auslenkung begrenzte, Bewegung des jeweiligen Ausrichtungselements erfolgen kann. Die Ausrichtelemente können somit entgegen der Auslenkung der Grundkörper der Hebelelemente oder weiter als die Auslenkung der Grundkörper der Hebelelemente eine Auslenkung bzw. Anpassung an die jeweilige Führungsbandform ermöglichen. Das Ausrichtungselement und der Grundkörper des Hebelelements wirken bevorzugt zum Ausbilden eines formschlüssigen Begrenzungsmittels zum Begrenzen der Schwenkbewegung des Ausrichtungselements gegenüber dem Grundkörper des Hebelelements zusammen. Es ist jedoch alternativ denkbar, dass ein zusätzliches Begrenzungsmittel an dem Ausrichtelement oder an dem Grundkörper des Hebelelements angeordnet ist.

Zumindest die Mehrzahl der Räder einer jeden Rädergruppe ist gemäß einer weiteren bevorzugten Ausführungsform der vorliegenden Erfindung als drehbar gelagerte Rollen,

Walzen oder Ringe, insbesondere von Wälzlagern, ausgebildet. Bevorzugt sind alle Räder einer jeden Rädergruppe als drehbar gelagerte Rollen, Walzen oder Ringe, insbesondere von Wälzlagern, ausgebildet. Diese Ausführungsform ist vorteilhaft, da gegenüber Gleitlagern eine Reduzierung der auftretenden Reibung und somit des auftretenden Verschleißes bewirkt wird.

Gemäß einer weiteren bevorzugten Ausführungsform der vorliegenden Erfindung ist eine An- und Abkoppelungseinrichtung zum Umpositionieren des ersten Fahrwerkteils gegenüber dem zweiten Fahrwerkteil vorgesehen, wobei der erste Fahrwerkteil mittels der An- und Abkoppelungseinrichtung in einer Betriebsstellung anordenbar ist und wobei der erste Fahrwerkteil mittels der An- und Abkoppelungseinrichtung in einer Montage-/Demontagestellung anordenbar ist, wobei der erste Fahrwerkteil in der Betriebsstellung näher zum zweiten Fahrwerkteil beabstandet ist als in der Montage-/Demontagestellung. Diese Ausführungsform ist vorteilhaft, da durch eine leicht zu bedienende Mechanik eine Beschleunigung und Verbesserung der Anbringung einer erfindungsgemäßen Schweißvorrichtung an einem Führungsband und der Abnahme einer erfindungsgemäßen Schweißvorrichtung von einem Führungsband schnell und komfortabel ermöglicht wird. Insbesondere ist dank dieser Ausführungsform nur eine Person zur Anbringung oder Abnahme erforderlich.

Am ersten Fahrwerkteil ist gemäß einer weiteren bevorzugten Ausführungsform der vorliegenden Erfindung eine Antriebseinrichtung angeordnet, wobei die Antriebseinrichtung in einem Betriebszustand federkraftbeaufschlagt an eine erste Stirnseite des Führungsbandes gepresst wird und wobei in dem Betriebszustand durch die Federkraftbeaufschlagung jeweils mindestens ein Rad der am zweiten Fahrwerkteil angeordneten Rädergruppen an die zweite Stirnseite des Führungsbandes angepresst wird, wobei die Anpresskraft mit der die beiden Räder des zweiten Fahrwerkteils an die zweite Stirnseite angepresst werden höher ist als die Anpresskraft, mit der die zum Kontaktieren der ersten Stirnseite des Führungsbandes ausgebildeten Räder der am ersten Fahrwerkteil angeordneten Rädergruppen an die erste Stirnseite des Führungsbandes angepresst werden. Diese Ausführungsform ist vorteilhaft, da durch die Antriebseinrichtung und die am zweiten Fahrwerkteil angeordneten Rädergruppen eine präzise Anbindung der Schweißvorrichtung an dem Führungsband bewirkbar ist. Die Antriebsreinrichtung wird dabei bevorzugt mit einer Kraft von 100N bis 200N, insbesondere mit einer Kraft zwischen 120N und 160N, insbesondere mit 140N oder mit im Wesentlichen 140N, durch das Federelement oder die Federelemente an das Führungsband angepresst.

Die Verwendung der Wörter "im Wesentlichen" definiert bevorzugt in allen Fällen, in denen diese Wörter im Rahmen der vorliegenden Erfindung verwendet werden eine Abweichung im Bereich von 1%-30%, insbesondere von 1%-20%, insbesondere von 1%-10%, insbesondere von 1%-5%, insbesondere von 1%-2%, von der Festlegung, die ohne die Verwendung dieser Wörter gegeben wäre.

Weitere Vorteile, Ziele und Eigenschaften der vorliegenden Erfindung werden anhand nachfolgender Beschreibung anliegender Zeichnungen erläutert, in welchen beispielhaft die erfindungsgemäße Vorrichtung dargestellt ist. Bauteile oder Elemente der erfindungsgemäßen Vorrichtung, welche in den Figuren wenigstens im Wesentlichen hinsichtlich ihrer Funktion übereinstimmen, können hierbei mit gleichen Bezugszeichen gekennzeichnet sein, wobei diese Bauteile oder Elemente nicht in allen Figuren beziffert oder erläutert sein müssen.

Darin zeigen:
- Fig. 1: eine Anordnung der erfindungsgemäßen Schweißvorrichtung an einem ersten Führungsband;
- Fig. 2: eine Anordnung der erfindungsgemäßen Schweißvorrichtung an einem zweiten Führungsband;
- Fig. 3a-3d: mehrere Darstellungen eines Hebelelements;
- Fig. 4a-4e: weitere Darstellungen des Hebelelements
- Fig. 5a: eine perspektivische Darstellung eines Grundkörpers eines Hebelelements;
- Fig. 5b: eine perspektivische Darstellung eines Ausrichtungselements;
- Fig. 6: eine erste perspektivische Ansicht einer An- und Abkoppelungseinrichtung in einem ersten Zustand
- Fig. 7: eine zweite perspektivische Ansicht einer An- und Abkoppelungseinrichtung in dem ersten Zustand
- Fig. 8: eine erste perspektivische Ansicht einer An- und Abkoppelungseinrichtung in einem zweiten Zustand
- Fig. 9: eine zweite perspektivische Ansicht einer An- und Abkoppelungseinrichtung in dem zweiten Zustand;
- Fig. 10: eine perspektivische Ansicht einer erfindungsgemäßen Schweißvorrichtung;
- Fig. 11: eine Frontalansicht einer erfindungsgemäßen Schweißvorrichtung; und
- Fig. 12: eine Draufsicht auf die Unterseite der erfindungsgemäßen Schweißvorrichtung.

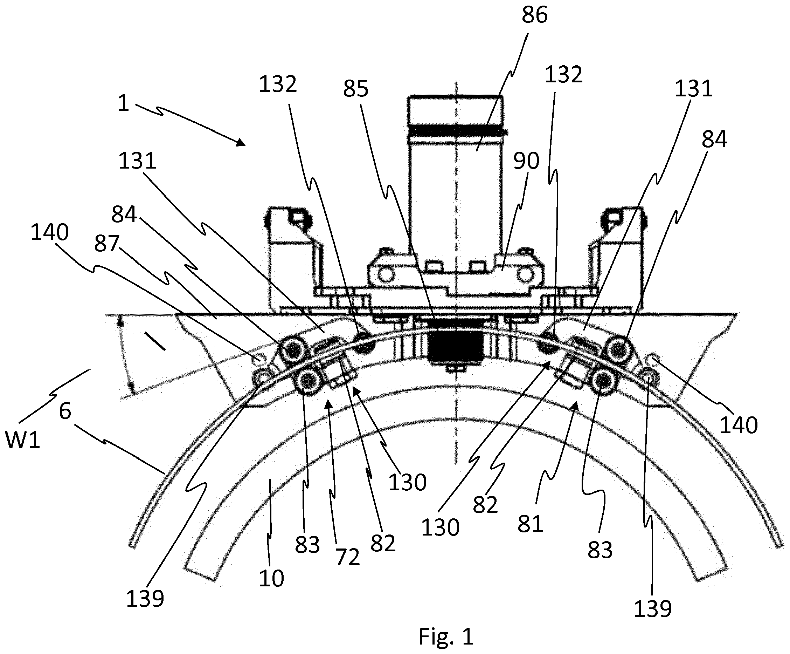

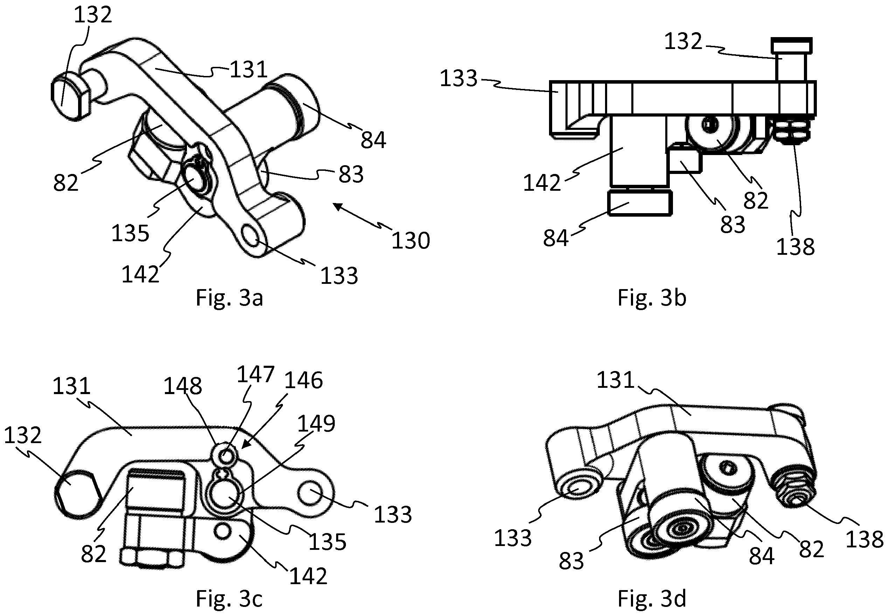

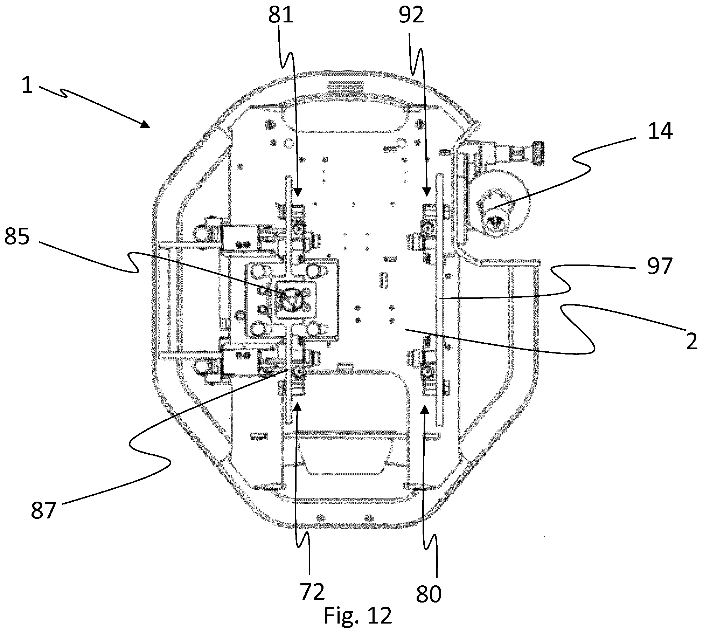

Fig. 1 zeigt eine Schnittdarstellung einer erfindungsgemäßen Schweißvorrichtung 1, die an einem Führungsband 6 angeordnet ist, das sich um ein Rohr 10 herum erstreckt. Die Schweißvorrichtung 1 umfasst dabei ein erstes Fahrwerksteil 87, das gegenüber dem Rahmen 2 (vgl. Fig. 12) der Vorrichtung 1 bewegbar angeordnet ist. Der erste Fahrwerksteil 87 weist dabei zwei Hebelelemente 130 auf, die Grundkörper 131 umfassen, an denen jeweils eine Rädergruppe 72, 81 gelagert bzw. angeordnet ist. Die Rädergruppen sind dabei an Ausrichtungselementen 142 (vgl. Fig. 3a-3d) angeordnet, die schwenkbar an dem Grundkörper 131 angeordnet sind. Jede Rädergruppe 72, 80, 81, 92 umfasst dabei bevorzugt drei Räder nämlich ein Stirnseitenrad 82, ein Unterseitenrad 83 und ein Oberseitenrad 84.

Das Hebelelement 130 ist an einem ersten längsseitigen Ende mit einer Schwenkachse 132 verbunden und bevorzugt an einem zweiten längsseitigen Ende über Positioniermittel 140, insbesondere Löcher in dem ersten Fahrwerkteil 87 oder Zapfen an dem ersten Fahrwerkteil 87, in verschiedenen vorgegebenen Stellungen bzw. Ausrichtungen bzw. Positionen anordenbar. Bevorzugt sind zwei oder drei oder mehr als drei Positioniermittel 140 zum Anordnen des zweiten längsseitigen Endes des jeweiligen Grundkörpers 131 in verschiedenen Positionen vorgesehen. Bevorzugt sind die Hebelelemente 130 mittels der Positioniermittel 140 horizontal und/oder in einem Winkel in einem Bereich zwischen 5° und 15°, insbesondere mit 10° oder mit im Wesentlichen 10°, gegenüber der Horizontalen und/oder in einem Bereich zwischen 15° und 25°, insbesondere mit 20° oder mit im Wesentlichen 20°, gegenüber der Horizontalen anordenbar.

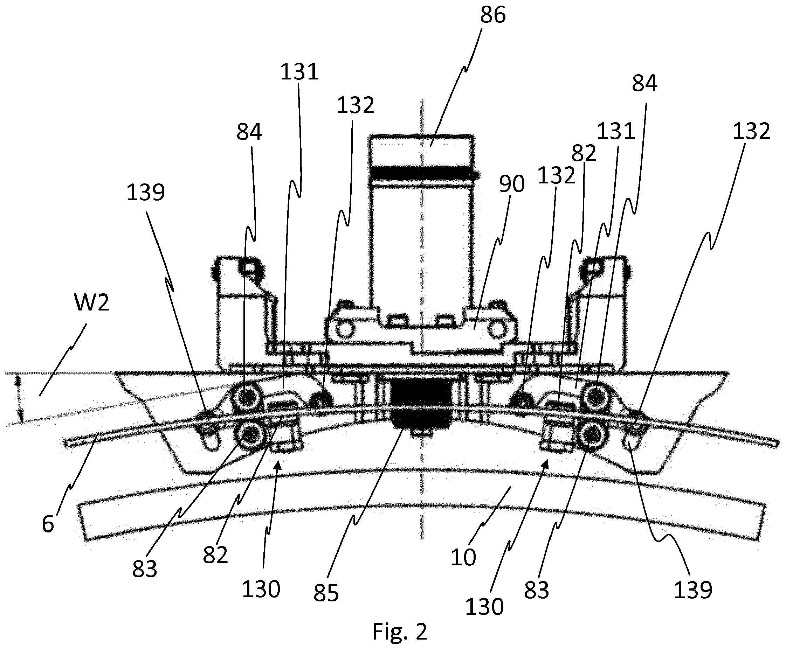

Fig. 2 zeigt eine Ausführungsform, gemäß der die Hebelelemente 130 einerseits ebenfalls mit der Schwenkachse 132 gelagert sind und andererseits mit einem Verstellelement 139 zum stufenlosen Ausrichten des Hebelelements 130 gekoppelt sind. Bevorzugt sind die Hebelelemente 130 mittels dem Verstellelement 139 horizontal und in einem Winkel in einem Bereich zwischen 0° und 15°, insbesondere mit 10° oder mit im Wesentlichen 10°, gegenüber der Horizontalen oder in einem Bereich zwischen 0° und 25°, insbesondere mit 20° oder mit im Wesentlichen 20°, gegenüber der Horizontalen stufenlos anordenbar.

Fig. 3a zeigt eine erste perspektivische Ansicht des Hebelelements 130. Das Hebelelement 130 weist dabei einen Grundkörper 131, ein bevorzugt über einen Verbindungszapfen 135 mit dem Grundkörper 131 gekoppeltes Ausrichtungselement 142 und mehrere an dem Ausrichtungselement 142 angeordnete Räder 82, 83, 84. Das Bezugszeichen 132 kennzeichnet hierbei ein Element, das eine Schwenkachse ausbildet, um die das Hebelelement 130 schwenkbar ist, und das ortsfest an dem Fahrwerkteil 87 bzw. 97 angeordnet ist. Das Bezugszeichen 133 kennzeichnet hingegen eine ortsveränderliche Anbringungsstelle, die zum Anordnen des zweiten Endes des Hebelelements 130 in Stufen an dem Positioniermittel 140 (vgl. Fig. 1) oder stufenlos an dem Verstellelement 139 dient. Das die Schwenkachse bildende Element 132 ist bevorzugt mittels einem Arretierungsmittel 138, insbesondere einem Sicherungsring oder einer Schraube, gegen eine axiale Verschiebung gesichert (vgl. Fig. 3b).

Fig. 3c zeigt, dass das Ausrichtungselement 142 bevorzugt über den Verbindungszapfen 135 mit dem Grundkörper 131 gekoppelt ist, wobei bevorzugt ein Sicherungsmittel 149, wie eine Schraube oder ein Sicherungsring, zum Verhindern einer Relativbewegung des Grundkörpers 131 zum Ausrichtungselement 142 in axialer Richtung des Zapfens 147 vorgesehen ist. Weiterhin ist bevorzugt am Grundkörper 131 und/oder am Ausrichtungselement 142 ein Begrenzungsmittel 146 ausgebildet, wobei als Begrenzungsmittel 146 bevorzugt zum einen ein am Grundkörper 131 ausgebildetes Widerlager 148 und zum anderen ein am Ausrichtungselement 142 ausgebildeter Zapfen verstanden werden kann. Durch das Begrenzungsmittel 146 wird eine Relativbewegung, insbesondere Schwenkbewegung, zwischen dem Grundkörper 131 und dem Ausrichtungselement 142 begrenzt. Das Widerlager 148 weist dabei bevorzugt eine solche Form oder Größe auf, dass es die Schwenkbewegung des Ausrichtungselements 142 gegenüber dem Grundkörper 131 aufgrund eines Zusammentreffens des Zapfens 142 und des Widerlagers 148 in einer Richtung und bevorzugt in zwei Richtungen begrenzt.

Fig. 3d zeigt eine weitere perspektivische Ansicht des Hebelelements 130, wobei dieser Ansicht entnehmbar ist, wie die einzelnen Räder 82, 83, 84 bevorzugt zueinander ausgerichtet sind.

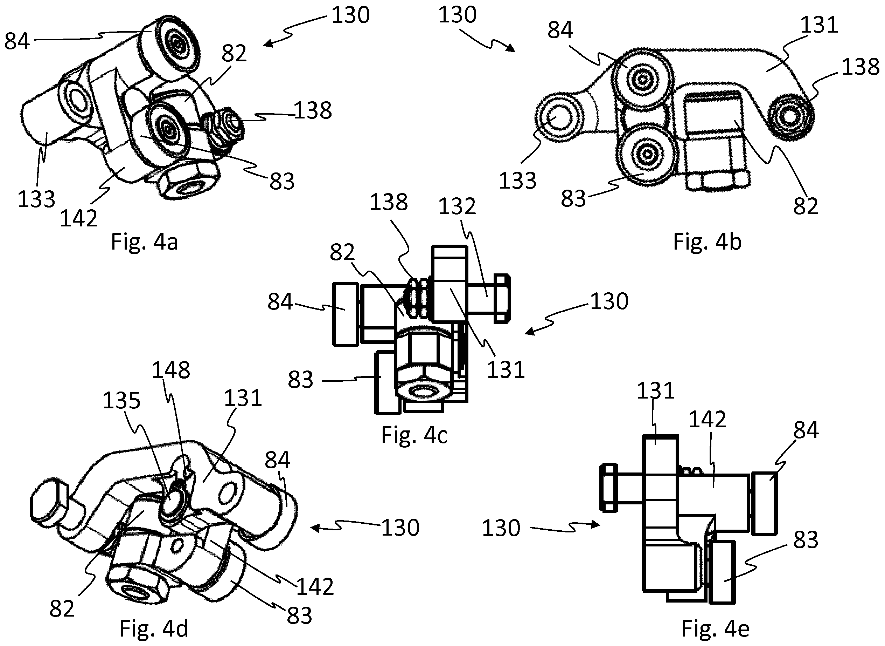

Die Fig. 4a bis 4e zeigen ebenfalls weitere Ansichten des Hebelelements 130.

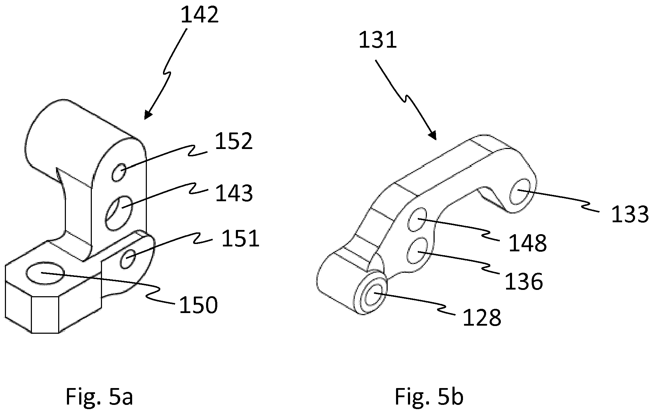

Fig. 5a zeigt eine perspektivische Ansicht eines über einen Verbindungszapfen mit einem Grundkörper 131 eines Hebelelements 130 koppelbaren Ausrichtungselements 142. Das Ausrichtungselement 142 weist ein Verbindungslager 143 zum Aufnehmen eines Verbindungszapfens zum Koppeln mit dem Grundkörper 131 des Hebelelements 130 auf. Weiterhin sind im Ausrichtungselement 142 jeweils ein Lager 150 zur Anbringung des Stirnseitenrades 82, ein Lager 151 zur Anbringung des Unterseitenrades 83 und ein Lager 152 zur Anbringung des Oberseitenrades 84 ausgebildet. Das Ausrichtungselement 142 ist bevorzugt um einen Winkel von bis zu 60° oder von bis zu 45° oder von bis zu 30° oder von bis zu 20° oder von bis zu 15° oder von bis zu 10° oder von bis zu 5° gegenüber dem Grundkörper 131 des Hebelelements 130 schwenkbar.

Fig. 5b zeigt eine perspektivische Darstellung des Grundkörpers 131 des Hebelelements 130. Neben den Lagern 128 und 133 zur Ausrichtung des Hebelelements 130 weist der Grundkörper 131 ebenfalls ein Verbindungslager 136 zum Koppeln mit dem Ausrichtungselement 142 und ein Widerlager 148 zur Begrenzung der Schwenkbewegung des Ausrichtungselements 142 gegenüber dem Grundkörper 131 des Hebelelements 130 auf.

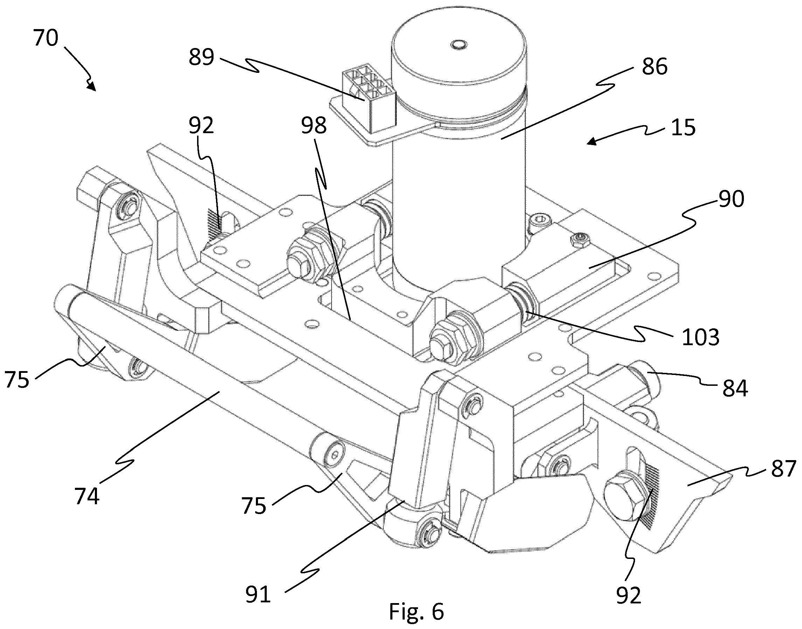

In Fig. 6 ist eine An- und Abkoppelungseinrichtung gezeigt, es ist erkennbar, dass das Griffteil 74 ausgelenkt ist und dadurch eine Betätigung eines Umpositioniermechanismus erfolgte, wodurch die Leit-Stütz-Struktur 87 mit daran angekoppelten Rädern bzw. Rädergruppen und ebenfalls daran angekoppeltem Motor 86 umpositioniert wird. Der durch das Bezugszeichen 98 gekennzeichnete Verschiebebereich ist auf ein Minimum reduziert, wodurch eine ausgelenkte Stellung der Leit-Stütz-Struktur 87 und somit der ersten und dritten Rädergruppe 72, 81 erkennbar ist.

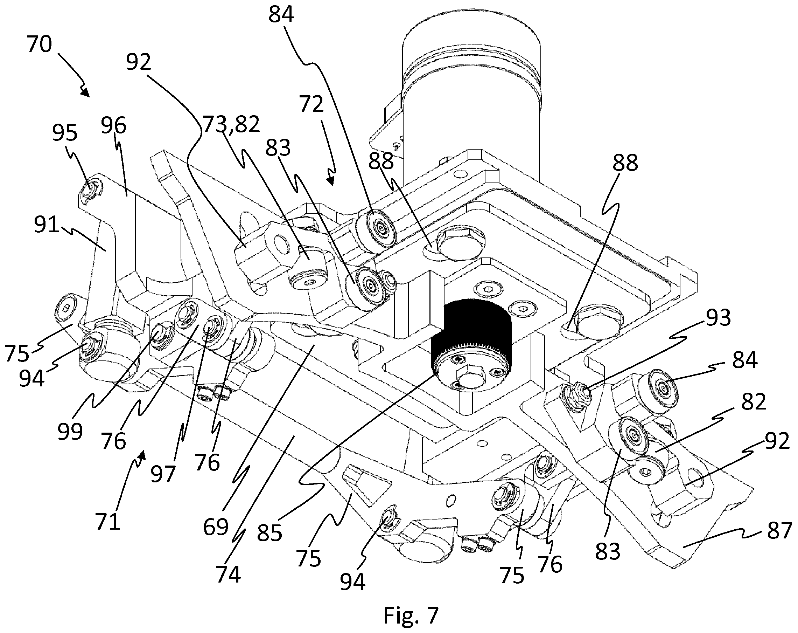

Fig. 7 zeigt weitere Elemente des zum Umpositionieren der Leit-Stütz-Struktur 87 bevorzugt eingesetzten Hebelmechanismus 71. Es ist ersichtlich, dass an beiden Seiten des Griffteils 74 ein Anteil des Hebelmechanismus 71 ausgebildet ist. Es ist jedoch ebenfalls im Sinne der vorliegenden Erfindung, dass der Hebelmechanismus 71 nur einen dieser Anteile oder mehr als zwei dieser Anteile aufweist. Weiterhin ist denkbar, dass ein Anteil nicht an einem Ende des Griffteils 74 angeordnet ist, sondern zwischen den Enden, insbesondere in der Mitte, des Griffteils 74 angeordnet ist. Im dargestellten Fall ist an dem Griffteil 74 beiderseits ein formstabiles Kraftübertragungselement 75 angeordnet, das bevorzugt über eine unterseitige Lagerung 94 eines Hubelements 91 mit dem Hubelement 91 verbunden ist. Das Hubelement 91 bewirkt zusammen mit der Schwenklagerung 99, durch die das Kraftübertragungselement 75 schwenkbar am Grundkörper 69 angeordnet ist, eine Begrenzung der Schwenkbewegung. Ein vom Griffteil 74 beabstandetes Ende des Kraftübertragungselements 75 ist bevorzugt mit zwei Mitteln zum Transferieren der Schwenkbewegung in eine Linearbewegung 76 gekoppelt. Eines der Mittel zum Transferieren der Schwenkbewegung in eine Linearbewegung 76 ist dabei einerseits bevorzugt mit dem Grundkörper 69 verbunden und das andere Mittel zum Transferieren der Schwenkbewegung in eine Linearbewegung 76 ist bevorzugt mit einem Ende mit der Leit-Stütz-Struktur 74 verbunden. Weiterhin sind die Mittel zum Transferieren der Schwenkbewegung in eine Linearbewegung 76 bevorzugt derart mit dem Kraftübertragungselement 75 gekoppelt, dass eine Bewegung des Kraftübertragungselements 75 in eine Bewegung der Mittel zum Transferieren der Schwenkbewegung in eine Linearbewegung 76 umsetzbar ist. Die Mittel zum Transferieren der Schwenkbewegung in eine Linearbewegung 76 und das Kraftübertragungselement 75 bilden in ihrer Gesamtheit somit eine Auslenkeinrichtung 71, insbesondere zur Umsetzung einer Kniehebelmechanik, aus.

Weiterhin zeigt diese Darstellung, dass das Hubelement 91 über ein oberseitiges Lager 95 mit einer an dem Grundkörper 69 ausgebildeten vorrichtungsfesten Leit-Stütz-Struktur 96 angeordnet ist. Das Hubelement 91 ist im dem gezeigten Zustand eingefahren. Dies ist vorteilhaft, da die Hebelverhältnisse zur Auslenkung der Leit-Stütz-Struktur 87 gegenüber den Hebelverhältnissen im in Fig. 3 gezeigten Zustand verändert sind. Die Mittel zum Transferieren der Schwenkbewegung in eine Linearbewegung 76 sind in dem gezeigten Zustand bevorzugt stärker zueinander geneigt als in dem in Fig. 6 gezeigten Zustand. Bevorzugt sind die Mittel zum Transferieren der Schwenkbewegung in eine Linearbewegung 76 über eine Verbindungsstelle 97 oder im Bereich einer Verbindungsstelle 97 miteinander gekoppelt.

Der durch die Fig. 7 dargestellte Zustand entspricht dem in Fig. 6 gezeigten Zustand, gemäß dem das Antriebsrad 85 vom Führungsband 6 mittels einer An- und Abkoppelungseinrichtung 70 abgekoppelt ist.

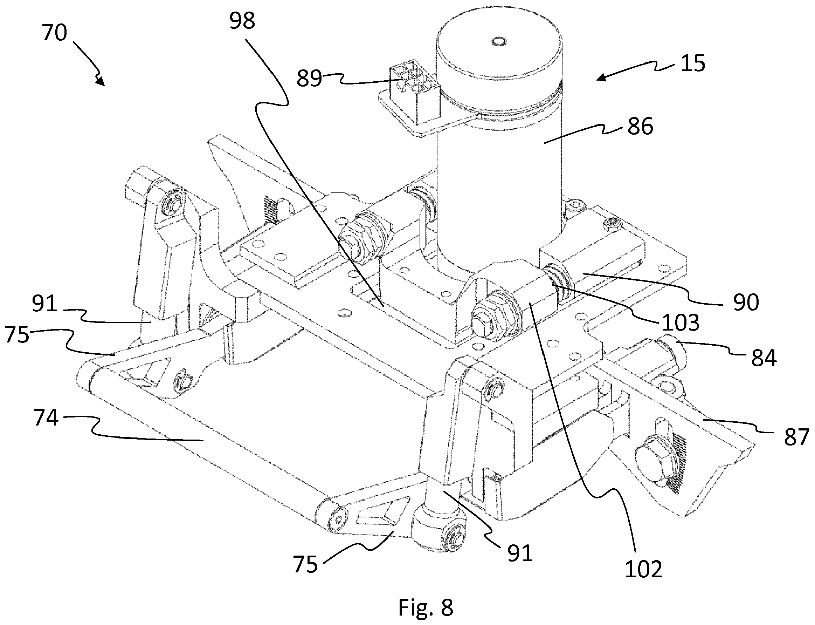

Fig. 8 zeigt eine Halterung 90 zum Halten der Antriebseinrichtung 15 bzw. des Motors 86. Die Halterung 90 ist mit der Leit-Stütz-Struktur 87 verbunden und wird daher unmittelbar umpositioniert, wenn die Leit-Stütz-Struktur 87 umpositioniert wird. Weiterhin ist die Halterung 90 über ein oder mehrere Federelemente 103 mit einem Fixteil gekoppelt. Die Halterung 90 kann hierbei unter Auslenkung der Federelemente 103 gegenüber dem Fixteil 102 verschoben werden. Weiterhin erfolgt beim Ankoppeln der Antriebseinrichtung 15, insbesondere des Antriebsrades 85, an das Führungsband 6 eine Auslenkung der Halterung 90 gegenüber dem Fixteil 102. Die Federelemente 103 bewirken dadurch, dass über das Antriebsrad 85 eine Anpresskraft in das Führungsband 6 eingeleitet wird, wodurch zumindest die Stirnseitenräder 82 der zweiten und vierten Rädergruppe 80, 92 an das Führungsband 6 angepresst werden. Hierdurch erfolgt bevorzugt eine für den Betrieb der Schweißvorrichtung 1 erforderliche Ausrichtung der Schweißvorrichtung 1 gegenüber dem Führungsband 6.

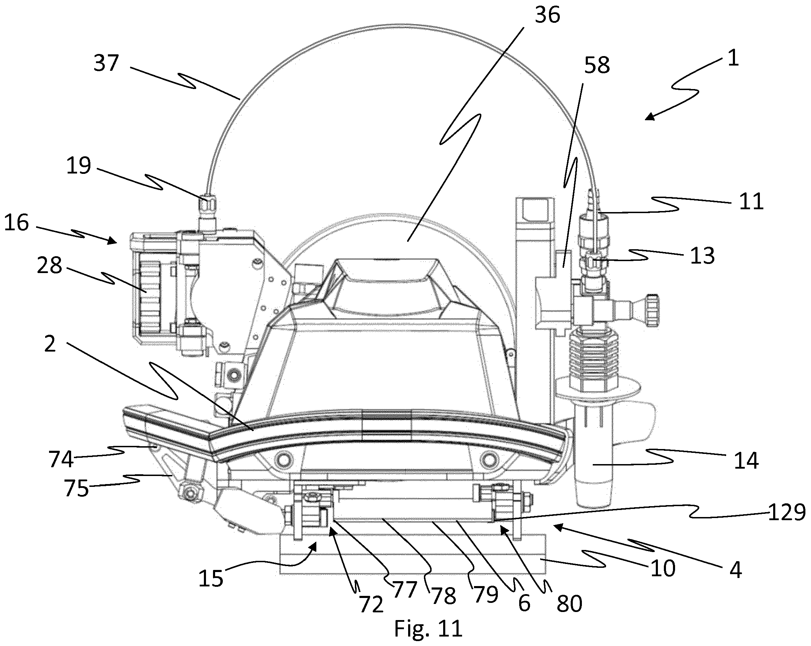

Das Bezugszeichen 98 kennzeichnet einen Verschiebebereich, in dem die Halteeinrichtung 90 zusammen mit dem Fixteil 102 infolge einer Betätigung der An- und Abkoppelungseinrichtung 70 verschiebbar ist. Aus der Stellung des Griffteils 74 und dem verbleibenden Verschiebeweg 98 ist erkennbar, dass die Darstellung einen Zustand zeigt, in dem das Antriebsrad 85 (vgl. Fig. 1) an dem Führungsband (vgl. Fig. 11) anliegen kann. Die Halterung 90 kann besonders bevorzugt auch als eine Motorausrückhalterung ausgeführt sein, durch die der Motor 86 bevorzugt unabhängig von einer Bewegung des Griffteils 74 gegenüber der Leit-Stütz-Struktur 87 umpositionierbar bzw. auslenkbar bzw. verschiebbar ist.

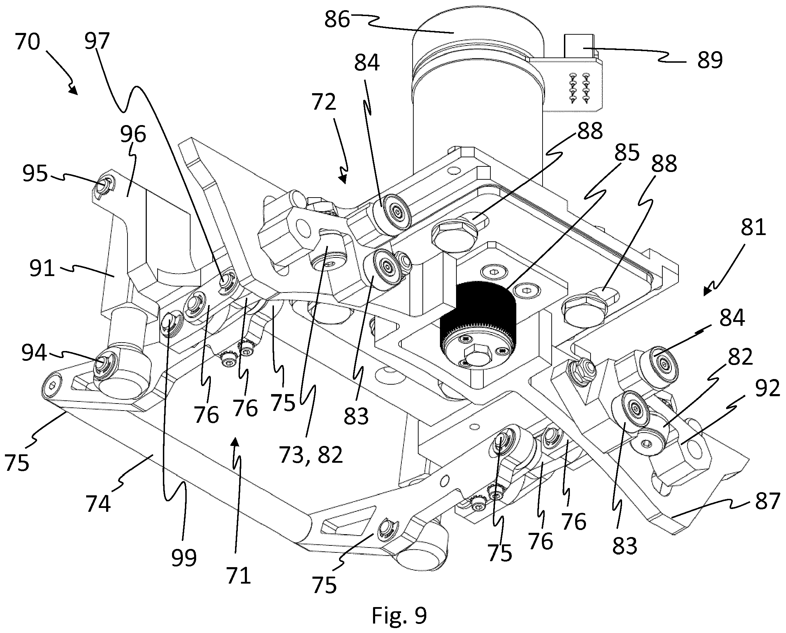

Fig. 9 zeigt das Hubelement 91 in einem ausgefahren Zustand und die Mittel zum Transferieren der Schwenkbewegung in eine Linearbewegung 76 weisen einen gegenüber dem in Fig. 7 gezeigten Zustand flachere bzw. weniger geneigte Ausrichtung auf.

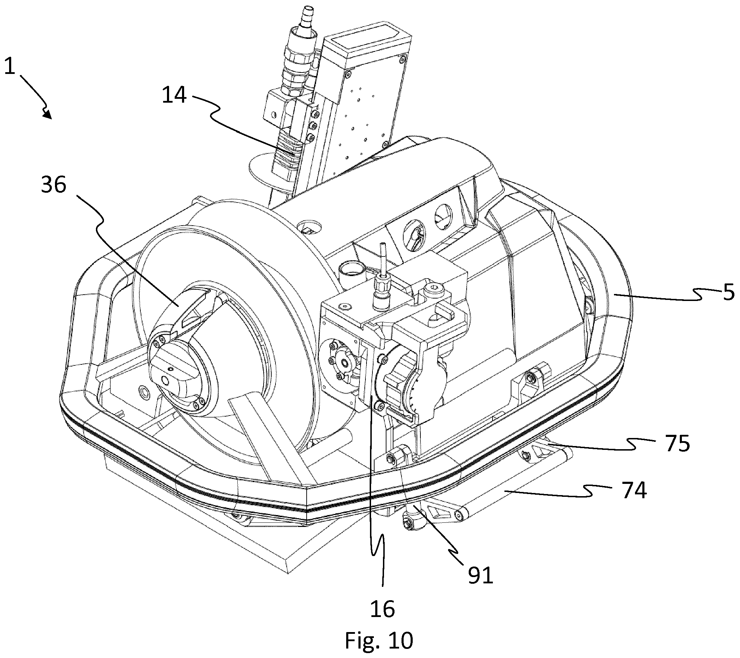

Fig. 10 zeigt die erfindungsgemäße Schweißvorrichtung 1 bzw. Orbitalschweißvorrichtung 1 in einer perspektivischen Darstellung. Die Schweißvorrichtung 1 umfasst bevorzugt eine Drahtbevorratungseinrichtung 36 zur Aufnahme von Drahtspulen, einen Schweißkopf 14, eine Drahtvorschubeinrichtung 16 und ein Halteteil 5. Unterhalb des Halteteils 5 ist bevorzugt der Griffteil 74 zum Umpositionieren zumindest eines Elements der Antriebseinrichtung 15 und/oder eines Rades des Fahrwerks 4 (vgl. Fig. 11).

Fig. 11 zeigt die erfindungsgemäße Orbitalschweißvorrichtung 1 angeordnet an einem um ein Rohr 10 herum angeordnetes Führungsband 6. Die Orbitalschweißvorrichtung 1 weist dabei eine mit dem Führungsband 6 in Kontakt bringbare Antriebseinrichtung 15 auf. Die Antriebseinrichtung 15 weist bevorzugt einen Motor 86 und ein von dem Motor 86 angetriebenes Rad 85, insbesondere Zahnrad, auf, das mit dem Führungsband 6 zum Bewegen der Schweißvorrichtung 1 kraft- und/oder formschlüssig in Kontakt bringbar ist. Bevorzugt erstreckt sich die Rotationsachse der Antriebseinrichtung 15, wenn die Schweißvorrichtung 1 an dem um das Rohr 10 angeordneten Führungsband 6 angekoppelt ist, in radialer Richtung des Rohres 10. Weiterhin kennzeichnet das Bezugszeichen 4 bevorzugt ein Fahrwerk der Orbitalschweißvorrichtung 1. Das Fahrwerk 4 weist bevorzugt zumindest zwei Rädergruppen 72, 80 mit jeweils mindestens zwei Rädern auf, wobei ein Rad 83 je Rädergruppe 72, 80 bevorzugt derart angeordnet ist, dass es mit der Unterseite des Führungsbandes 6 in Kontakt bringbar ist und ein zweites Rad der Rädergruppe derart angeordnet ist, dass es zeitgleich, wenn das erste Rad mit der Unterseite 79 des Führungsbandes 6 in Kontakt steht, mit der Stirnseite 77 des Führungsbandes 6 oder mit der Oberseite 78 des Führungsbandes 6 in Kontakt steht. Weiterhin weist der Schweißkopf 14 eine weitere Anschlusseinrichtung 13 auf, mittels der das Leitungselement 37 mit dem Schweißkopf 14 koppelbar ist. Ferner ist am Schweißkopf 14 bevorzugt eine Anschlusseinrichtung 11 zum Anschließen einer Fluidversorgungsleitung, insbesondere einer Gasleitung, angeordnet. Das Bezugszeichen 58 kennzeichnet eine Antriebseinrichtung bzw. Bewegungseinrichtung, mittels welcher der Schweißkopf 14 zumindest in einer Richtung rotiert oder verfahrbar ist. Das Bezugszeichen 72 kennzeichnet die erste Rädergruppe, die in dem dargestellten Zustand von dem Führungsband 6 beabstandet ist.

Fig. 12 zeigt eine Draufsicht auf die Unterseite der erfindungsgemäßen Schweißvorrichtung 1. Die erfindungsgemäße Schweißvorrichtung 1 weist dabei einen Rahmenteil 2 auf, an dem Funktionseinrichtungen der Schweißvorrichtung 1 angeordnet sind bzw. anordenbar sind. Die Bezugszeichen 72, 80 81 und 92 kennzeichnen verschiedene Rädergruppen des Fahrwerks 4 der Schweißvorrichtung 1. Das Fahrwerk 4 wird hierbei ebenfalls durch eine umpositionierbare Leit-Stütz-Struktur 87 bzw. ein erstes Fahrwerksteil 87 und ein zweites bevorzugt vorrichtungsfestes Fahrwerkteil 97 gebildet, wobei am ersten Fahrwerkteil 87 die Rädergruppen 72 und 81 angeordnet sind und am zweiten Fahrwerkteil 97 die Rädergruppen 80 und 92 angeordnet sind.

Die vorliegende Erfindung bezieht sich somit auf ein Schweißvorrichtung 1, insbesondere eine Orbitalschweißvorrichtung. Die vorliegende Erfindung umfasst dabei bevorzugt mindestens ein Fahrwerk 4 zum Koppeln mit einem Führungsband 6. Das Fahrwerk 4 umfasst dabei bevorzugt einen ersten Fahrwerksteil 87 und eine zweiten Fahrwerksteil 97 umfasst, wobei der erste Fahrwerksteil 87 und der zweite Fahrwerksteil 97 bevorzugt orthogonal zur Transportrichtung des Fahrwerks 4 voneinander beabstandet sind. Besonders bevorzugt weist der erste Fahrwerksteil 87 zwei Rädergruppen 72, 81 mit jeweils mehreren Rädern 82, 83, 84 und der zweite Fahrwerksteil 97 zwei Rädergruppen 80, 92 mit jeweils mehreren Rädern 82, 83, 84 auf, wobei das erste Fahrwerksteil 87 bevorzugt umpositionierbar ist und das zweite Fahrwerksteil 97 vorrichtungsfest ist. Am ersten Fahrwerkteil 87 ist besonders bevorzugt eine Antriebseinrichtung 15 angeordnet, wobei die Antriebseinrichtung 15 in einem Betriebszustand federkraftbeaufschlagt an eine erste Stirnseite 77 des Führungsbandes 6 anpressbar ist. Bevorzugt ist zumindest ein Rad 82 jeder Rädergruppe 72, 80, 81, 92 jeweils an einem um eine Schwenkachse 132 schwenkbaren Hebelelement 130 angeordnet, wobei die Hebelelemente 130 mit den jeweils daran angeordneten Rädern 82, 83, 84 bevorzugt jeweils in mehreren Stellungen zum Anpassen des Fahrwerks 4 an verschiedene Führungsbanddurchmesser positionierbar sind. Erfindungsgemäß sind an jedem Hebelelement 130 drei Räder 82, 83, 84 angeordnet, wobei jeweils ein Rad 82 zum Kontaktieren einer Stirnfläche 77, 129 des Führungsbandes 6, jeweils ein Rad 84 zum Kontaktieren einer äußeren Oberfläche 78 des Führungsbandes 6 und jeweils ein Rad 83 zum Kontaktieren der innenliegenden Oberfläche des Führungsbandes 6 angeordnet ist. Bevorzugt sind die Räder 82, 83, 84 jeder Rädergruppe 72, 80, 81, 92 jeweils an einem Ausrichtungselement 142 angeordnet, wobei das Ausrichtungselement bevorzugt schwenkbar an dem Grundkörper 131 des Hebelelements 130 angeordnet ist.

Bevorzugt ist mindestens oder genau ein Griffteil 74 zum Umpositionieren zumindest eines Elements der Antriebseinrichtung 15 und zumindest eines Rades des ersten Fahrwerkteils 87 und bevorzugt des gesamten Fahrwerkteils 87 vorgesehen, wobei die Antriebseinrichtung bevorzugt unabhängig von einer Bewegung eines Griffteils 74 gegenüber der Leit-Stütz-Struktur 87 umpositionierbar ist.

Ferner erstreckt sich bevorzugt die Längsrichtung der Schweißvorrichtung 1 in Transportrichtung und die Breitenrichtung der Schweißvorrichtung 1 erstreckt sich bevorzugt orthogonal zur Längsrichtung des Führungsbandes 6, wobei die Antriebseinrichtung 15 in Breitenrichtung F linear verschiebbar gelagert ist.

Besonders bevorzugt umfasst die erfindungsgemäße Schweißvorrichtung hierbei mindestens ein Fahrwerk 4 zum Ankoppeln der Schweißvorrichtung 1 an einem Führungsband 6, wobei das Fahrwerk 4 zumindest eine erste Rädergruppe 72 und eine zweite Rädergruppe 77 aufweist, wobei die erste Rädergruppe 72 und die zweite Rädergruppe 77 zumindest orthogonal zur Transportrichtung voneinander beabstandet sind, und wobei die erste Rädergruppe 72 und die zweite Rädergruppe 77 orthogonal zur Transportrichtung zumindest in zwei verschiedenen Relativpositionen zueinander anordenbar sind. Das Führungsband ist bevorzugt nicht Teil der Schweißvorrichtung 1, sondern wird besonders bevorzugt lediglich als Referenz zum Erläutern der Funktionalität der erfindungsgemäßen Schweißvorrichtung herangezogen.

Die erfindungsgemäße Schweißvorrichtung umfasst bevorzugt eine Antriebseinrichtung 15 zum Bewegen der Schweißvorrichtung 1 gegenüber dem Führungsband 6, wobei die Antriebseinrichtung 15 zumindest einen Motor 86 und ein mit dem Führungsband 6 in Kontakt bringbares Kraftübertragungselement 85 aufweist. Weiterhin umfasst die erfindungsgemäße Vorrichtung bevorzugt eine Motorentkoppelungseinrichtung zum Umpositionieren mindestens eines Elements, insbesondere des Kraftübertragungselements 85, der Antriebseinrichtung 15. Bevorzugt ist durch die Motorentkoppelungseinrichtung in zumindest einer Relativposition zwischen der ersten Rädergruppe 72 und der zweiten Rädergruppe 77, insbesondere in einem Betriebszustand, zumindest das eine Element der Antriebseinrichtung 15 derart umpositionierbar, dass eine Bewegung der Schweißvorrichtung 1 entlang dem Führungsband 6 von einem Betrieb der Antriebseinrichtung 15 entkoppelbar ist, insbesondere das Kraftübertragungselement vom Führungsband 6 beabstandet ist.

Die Längsrichtung der Schweißvorrichtung 1 erstreckt sich bevorzugt in Transportrichtung und die Breitenrichtung der Schweißvorrichtung 1 erstreckt sich bevorzugt orthogonal zur Längsrichtung des Führungsbandes 6, wobei die Antriebseinrichtung 15 in Breitenrichtung F linear verschiebbar gelagert ist. Ferner ist bevorzugt eine An- und Abkoppelungseinrichtung 70 zum Ankoppeln des Fahrwerks 4 und der Antriebseinrichtung 15 an das Führungsband 6 und zum Abkoppeln des Fahrwerks 4 und der Antriebseinrichtung 15 von dem Führungsband 6 vorgesehen. Bevorzugt weist die An- und Abkoppelungseinrichtung 7 eine Auslenkanordnung 71 zum zeitgleichen Umpositionieren mindestens eines Elements der Antriebseinrichtung 15 und mindestens eines Rades 73 mindestens einer Rädergruppe des Fahrwerks 4 auf.

Bevorzugt ist eine Führungseinrichtung zum Vorgeben eines linearen Verschiebewegs der Antriebseinrichtung in Breitenrichtung vorgesehen. Weiterhin ist denkbar, dass die Motorentkoppelungseinrichtung manuell auslösbar ist.

Besonders bevorzugt ist mittels der Motorentkoppelungseinrichtung die Antriebseinrichtung 15 gegenüber dem Führungsband 6 und der An- und Abkoppelungseinrichtung bewegbar. Somit kann die Antriebseinrichtung mittels der An- und Abkoppelungseinrichtung und mittels der Motorentkoppelungseinrichtung ausgelenkt bzw. umpositioniert werden. Ist die Schweißvorrichtung mit einem Führungsband über das Fahrwerk gekoppelt, so lässt sich durch eine Betätigung der Motorentkoppelungseinrichtung die Antriebseinrichtung oder mindestens ein Teil der Antriebseinrichtung gegenüber der An- und Abkoppelungseinrichtung bewegen, insbesondere linear verschieben. Dies bewirkt, dass der Wiederstand des Motors aufgehoben wird und die Schweißvorrichtung entlang dem Führungsband verschoben werden kann. Wird die Schweißvorrichtung jedoch vom Führungsband genommen, so wird die An- und Abkoppelungseinrichtung betätigt, durch die ebenfalls ein Umpositionieren bzw. Bewegen der Antriebseinrichtung oder mindestens eines Teils der Antriebseinrichtung und zusätzlich mindestens eines Rades des Fahrwerks, insbesondere zweier Rädergruppen, bewirkt wird. Diese Umpositionierung führt bevorzugt dazu, dass ein durch die Rädergruppen mit dem Führungsband bewirkter Formschluss aufgehoben wird. Zusätzlich wird ein Kontakt, insbesondere Reibschluss oder Formschluss, zwischen der Antriebseinrichtung und dem Führungsband aufgehoben, wodurch die Schweißvorrichtung von dem Führungsband beabstandet werden kann. Entsprechend ist die Ankoppelung der Schweißvorrichtung an dem Führungsband möglich.

Die Antriebseinrichtung 15, insbesondere das Kraftübertragungselement 85, ist somit bevorzugt aus einer zum Anliegen an dem Führungsband 6 ausgerichteten Stellung in eine weitere Stellung zum Beabstanden der Antriebseinrichtung von dem Führungsband 6 überführbar.

**Bezugszeichenliste**

| | | | |
|---|---|---|---|
| 1 | Schweißvorrichtung | 76 | Mittel zum Transferieren einer Schwenkbewegung in eine Linearbewegung |
| 2 | Rahmenteil | 77 | Stirnseite des Führungsbands |
| 4 | Fahrwerk | 78 | äußere Oberfläche (in radialer Richtung) |
| 5 | Halterahmen | 78 | äußere Oberfläche (in radialer Richtung) |
| 6 | Führungsband | 79 | innere Oberfläche (in radialer Richtung) |
| 10 | Rohr | | |
| 11 | Anschlusseinrichtung | 80 | zweite Rädergruppe |
| 13 | weitere Anschlusseinrichtung | 81 | dritte Rädergruppe |
| 14 | Schweißkopf | 82 | Stirnseitenrad |
| 15 | Antriebseinrichtung | 83 | Unterseitenrad |
| 16 | Drahtvorschubeinrichtung | 84 | Oberseitenrad |
| 19 | Verbindungselement | 85 | Antriebsrad |
| 28 | Einstellelement | 86 | Motor |
| 36 | Drahtbevorratungseinrichtung | 87 | Umpositionierbare Leit-Stütz-Struktur |
| 37 | Leitungselement | 88 | Führungselement |
| 70 | An- und Abkopplungseinrichtung | 89 | Datenstecker Antriebseinrichtung |
| 71 | Auslenkanordnung | 90 | Motorausrückhalterung / Halteeinrichtung |
| 72 | erste Rädergruppe | 91 | Hubelement |
| 74 | Griffteil | 92 | vierte Rädergruppe |
| 75 | Kraftübertragungselement | 94 | unterseitiges Lager |
| 95 | oberseitiges Lager | 138 | Arretierungsmittel |
| 96 | Vorrichtungsfeste Leit-Stütz-Struktur | 139 | Verstellelement zum stufenlosen Ausrichten des Hebelelements |
| 97 | zweiter Fahrwerkteil | 140 | Positioniermittel |
| 98 | Verschiebeweg | 142 | Ausrichtungselement |
| 99 | Schwenklager | 143 | Verbindungslager des Ausrichtungselements |
| 102 | Fixteil | | |
| 103 | Federelement | 146 | Begrenzungsmittel |
| 128 | Lager für Drehachse | 147 | Zapfen |
| 129 | weiter Stirnseite des Führungsbands | 148 | Widerlager |
| 130 | Hebelelement | 149 | Sicherungsmittel |
| 131 | Grundkörper des Hebelelements | 150 | Lager zur Anbringung des Stirnseitenrads |
| 132 | Schwenkachse | 151 | Lager zur Anbringung des Unterseitenrads |
| 133 | Ortsveränderliche Anbringungsstelle | 152 | Lager zur Anbringung des Oberseitenrads |
| 135 | Verbindungszapfen | W1 | erster Winkel |
| 136 | Verbindungslager des Grundkörpers | W2 | zweiter Winkel |

## Patentansprüche

1. Orbitalschweißvorrichtung,
mindestens umfassend
ein Fahrwerk (4) zum Koppeln mit einem Führungsband (6),
wobei das Fahrwerk (4) einen ersten Fahrwerksteil (87) und eine zweiten Fahrwerksteil (97) umfasst, wobei der erste Fahrwerksteil (87) und der zweite Fahrwerksteil (97) orthogonal zur Transportrichtung des Fahrwerks (4) voneinander beabstandet sind,
wobei am ersten Fahrwerkteil (87) eine Antriebseinrichtung (15) angeordnet ist, wobei die Antriebseinrichtung (15) in einem Betriebszustand federkraftbeaufschlagt an eine erste Stirnseite (77) des Führungsbandes (6) anpressbar ist,
**dadurch gekennzeichnet, dass**
der erste Fahrwerksteil (87) zwei Rädergruppen (72, 81) mit jeweils mehreren Rädern (82, 83, 84) und der zweite Fahrwerksteil (97) zwei Rädergruppen (80, 92) mit jeweils mehreren Rädern (82, 83, 84) aufweist, wobei das erste Fahrwerksteil (87) umpositionierbar ist und das zweite Fahrwerksteil (97) vorrichtungsfest ist,
wobei Hebelelemente (130) vorgesehen sind, wobei jedes Hebelelement jeweils an einem ersten längsseitigen Ende mit einer Schwenkachse (132) verbunden ist,
an jedem Hebelelement (130) drei Räder (82, 83, 84) angeordnet sind, wobei jeweils ein Rad (82) zum Kontaktieren einer Stirnfläche (77, 129) des Führungsbandes (6), jeweils ein Rad (84) zum Kontaktieren einer äußeren Oberfläche (78) des Führungsbandes (6) und jeweils ein Rad (83) zum Kontaktieren der innenliegenden Oberfläche des Führungsbandes (6) angeordnet ist,
wobei die Hebelelemente (130) mit den jeweils daran angeordneten Rädern (82, 83, 84) jeweils in mehreren Stellungen zum Anpassen des Fahrwerks (4) an verschiedene Führungsbanddurchmesser positionierbar sind,
wobei die Räder (82, 83, 84) jeder Rädergruppe (72, 80, 81, 92) jeweils an einem Ausrichtungselement (142) angeordnet sind, wobei das Ausrichtungselement schwenkbar an dem Grundkörper (131) des Hebelelements (130) angeordnet ist.

2. Schweißvorrichtung nach Anspruch 1,
**dadurch gekennzeichnet, dass**
das die Stellung der Hebelelemente (130) jeweils stufenlos einstellbar ist und mittels Arretierungsmitteln (138) jeweils in der eingestellten Ausrichtung arretierbar ist.

3. Schweißvorrichtung nach Anspruch 1,
**dadurch gekennzeichnet, dass**
Positioniermittel (140), insbesondere Formschlusselemente, zum stufenartigen und formschlüssigen Positionieren der Hebelelemente (130) in vorbestimmten Stellungen vorgesehen sind, wobei jedes Hebelelement (130) zumindest in zwei voneinander verschiedenen Stellungen, insbesondere in drei oder mindestens drei voneinander verschiedenen Stellungen, positionierbar ist.

4. Schweißvorrichtung nach Anspruch 1,
**dadurch gekennzeichnet, dass**
das Ausrichtungselement (142) und der Grundkörper (131) des Hebelelements (130) ein Begrenzungsmittel (146) zum Begrenzen der Schwenkbewegung des Ausrichtungselements (142) gegenüber dem Hebelelement (130) ausbilden.

5. Schweißvorrichtung nach einem der vorangegangenen Ansprüche,
**dadurch gekennzeichnet, dass**
zumindest die Mehrzahl der Räder (83, 84) einer jeden Rädergruppe (72, 80, 81, 92) als drehbar gelagerte Rollen, Walzen oder Ringe, insbesondere von Wälzlagern, ausgebildet sind.

6. Schweißvorrichtung nach einem der vorangegangenen Ansprüche,
**dadurch gekennzeichnet, dass**
eine An- und Abkoppelungseinrichtung (70) zum Umpositionieren des ersten Fahrwerkteils (87) gegenüber dem zweiten Fahrwerkteil (97) vorgesehen ist, wobei der erste Fahrwerkteil (87) mittels der An- und Abkoppelungseinrichtung (70) in einer Betriebsstellung anordenbar ist und wobei der erste Fahrwerkteil (87) mittels der An- und Abkoppelungseinrichtung (70) in einer Montage-/Demontagestellung anordenbar ist, wobei der erste Fahrwerkteil (87) in der Betriebsstellung näher zum zweiten Fahrwerkteil (97) beabstandet ist als in der Montage-/Demontagestellung.

7. Schweißvorrichtung nach Anspruch 6,
**dadurch gekennzeichnet, dass**
die An- und Abkoppelungseinrichtung (70) eine Auslenkanordnung (71) zum zeitgleichen Umpositionieren mindestens eines Elements der Antriebseinrichtung (15) und mindestens eines Rades (73) mindestens einer Rädergruppe des Fahrwerks (4) aufweist.

8. Schweißvorrichtung nach einem der vorangegangenen Ansprüche,
**dadurch gekennzeichnet, dass**
am ersten Fahrwerkteil (87) eine Antriebseinrichtung (15) angeordnet ist, wobei die Antriebseinrichtung (15) in einem Betriebszustand federkraftbeaufschlagt an eine erste Stirnseite (77) des Führungsbandes (6) anpressbar ist und wobei in dem Betriebszustand durch die Federkraftbeaufschlagung jeweils mindestens ein Rad (82) der am zweiten Fahrwerkteil (97) angeordneten Rädergruppen (72, 80, 81, 92) an die zweite Stirnseite (129) des Führungsbandes (6) angepresst wird, wobei die Anpresskraft mit der die beiden Räder (82) des zweiten Fahrwerkteils (97) an die zweite Stirnseite (129) angepresst werden höher ist als die Anpresskraft, mit der die zum Kontaktieren der ersten Stirnseite (77) des Führungsbandes (6) ausgebildeten Räder (82) der am ersten Fahrwerkteil (87) angeordneten Rädergruppen (72, 80, 81, 92) an die erste Stirnseite (77) des Führungsbandes (6) angepresst werden.

9. Schweißvorrichtung nach einem der vorangegangenen Ansprüche,
**dadurch gekennzeichnet**, dassmindestens oder genau ein Griffteil (74) zum Umpositionieren zumindest eines Elements der Antriebseinrichtung (15) und zumindest eines Rades des ersten Fahrwerkteils (87) und bevorzugt des gesamten Fahrwerkteils (87) vorgesehen ist,
wobei die Antriebseinrichtung unabhängig von einer Bewegung eines Griffteils (74) gegenüber der Leit-Stütz-Struktur (87) umpositionierbar ist.

10. Schweißvorrichtung nach einem der vorangegangenen Ansprüche,
**dadurch gekennzeichnet, dass**
sich die Längsrichtung der Schweißvorrichtung (1) in Transportrichtung erstreckt und sich die Breitenrichtung der Schweißvorrichtung (1) orthogonal zur Längsrichtung des Führungsbandes (6), erstreckt,
wobei die Antriebseinrichtung (15) in Breitenrichtung F linear verschiebbar gelagert ist.

11. Schweißvorrichtung nach einem der vorangegangenen Ansprüche,
**dadurch gekennzeichnet, dass**
die Antriebseinrichtung (15) zumindest einen Motor (86) und ein mit dem Führungsband (6) in Kontakt bringbares Kraftübertragungselement (85) aufweist,
und eine Motorentkoppelungseinrichtung zum Umpositionieren mindestens eines Elements, insbesondere des Kraftübertragungselements (85), der Antriebseinrichtung (15) ausgebildet ist,
wobei durch die Motorentkoppelungseinrichtung in zumindest einer Relativposition zwischen der ersten Rädergruppe (72) und der zweiten Rädergruppe (77), insbesondere in einem Betriebszustand, zumindest das eine Element der Antriebseinrichtung (15) derart umpositionierbar ist, dass eine Bewegung der Schweißvorrichtung (1) entlang dem Führungsband (6) von einem Betrieb der Antriebseinrichtung (15) entkoppelbar ist, insbesondere das Kraftübertragungselement vom Führungsband (6) beabstandet ist, wobei sich die Längsrichtung der Schweißvorrichtung (1) in Transportrichtung erstreckt und sich die Breitenrichtung der Schweißvorrichtung (1) orthogonal zur Längsrichtung des Führungsbandes (6), erstreckt,
wobei die Antriebseinrichtung (15) in Breitenrichtung F linear verschiebbar gelagert ist und
eine An- und Abkoppelungseinrichtung (70) zum Ankoppeln des Fahrwerks (4) und der Antriebseinrichtung (15) an das Führungsband (6) und zum Abkoppeln des Fahrwerks (4) und der Antriebseinrichtung (15) von dem Führungsband (6) vorgesehen ist,
wobei die An- und Abkoppelungseinrichtung (70) eine Auslenkanordnung (71) zum zeitgleichen Umpositionieren mindestens eines Elements der Antriebseinrichtung (15) und mindestens eines Rades (73) mindestens einer Rädergruppe des Fahrwerks (4) aufweist.

## Claims

1. Orbital welding carriage,
comprising at least
a chassis (4) for coupling to a conveying band (6), wherein the chassis (4) comprises a first carriage part (87) and a second carriage part (97), wherein the first carriage part (87) and the second carriage part (97) are spaced apart from each other orthogonally to the transport direction of the chassis (4),
the first carriage part (87) has two wheel groups (72, 81) each having a plurality of wheels (82, 83, 84) and the second carriage part (97) has two wheel groups (80, 92) each having a plurality of wheels (82, 83, 84), wherein the first carriage part (87) can be repositioned and the second carriage part (97) is fixed to the carriage,
wherein a drive device (15) is arranged on the first chassis part (87), wherein in a first operating state the drive device (15) can be pressed against a first front face (77) of the conveying band (6) under the action of a spring force,
**characterized in that**
wherein lever elements (130) are provided, wherein each lever element is connected at each longitudinal end to a pivot axis (132),
on each lever element (130) three wheels (82, 83, 84) are arranged, wherein in each case one wheel (82) is arranged for contacting an end face (77, 129) of the conveying band (6), one wheel (84) for contacting an outer surface (78) of the conveying band (6) and one wheel (83) for contacting the internal surface of the conveying band (6),
wherein the lever elements (130) with the wheels (82, 83, 84) arranged thereon can each be positioned in a plurality of positions to adapt the chassis (4) to different conveying band diameters,
wherein the wheels (82, 83, 84) of each wheel group (72, 80, 81, 92) are each arranged in an alignment element (142), wherein said alignment element is pivotably arranged on the base body (131) of the lever element (130).

2. Welding carriage according to Claim 1,
**characterized in that** the position of each of the lever elements (130) is continuously adjustable and can be locked in the adjusted alignment by means of locking means (138).

3. Welding carriage according to Claim 1,
**characterized in that** positioning means (140), in particular form-fitting elements, are provided for the continuous and form-fitting positioning of the lever elements (130) in pre-defined positions, wherein each lever element (130) can be positioned in at least two different positions, in particular in three or at least three different positions.

4. Welding carriage according to Claim 1,
**characterized in that** the alignment element (142) and the base body (131) of the lever element (130) form a limiting means (146) for limiting the pivoting movement of the alignment element (142) with respect to the lever element (130).

5. Welding carriage according to any one of the preceding claims,
**characterized in that** at least the majority of the wheels (83, 84) of any wheel group (72, 80, 81, 92) are designed as rotatably mounted rolls, rollers or rings, in particular roller bearings.

6. Welding carriage according to any one of the preceding claims,
**characterized in that** a coupling and decoupling device (70) is provided for repositioning the first chassis part (87) with respect to the second chassis part (97), wherein the first chassis part (87) can be arranged in an operating position by means of the coupling and decoupling device (70) and wherein the first chassis part (87) can be arranged in an assembly/disassembly position by means of the coupling and decoupling device (70), wherein the first chassis part (87) is spaced closer to the second chassis part (97) in the operating position than in the assembly/disassembly position.

7. Welding carriage according to Claim 6,
**characterized in that** the coupling and decoupling device (70) has a deflection arrangement (71) for the simultaneous re-positioning of at least one element of the drive device (15) and at least one wheel (73) of the at least one wheel group of the chassis (4).

8. Welding carriage according to any one of the preceding claims,
**characterized in that** on the first chassis part (87) a drive device (15) is arranged, wherein in an operating state the drive device (15) can be pressed against a first front face (77) of the conveying band (6) under the action of a spring force and wherein in the operating state, by means of the action of the spring force at least one wheel (82) of the wheel groups (72, 80, 81, 92) arranged on the chassis part (97) is pressed onto the second front face (129) of the conveying band (6), wherein the pressing force with which the two wheels (82) of the second chassis part (97) are pressed onto the second front face (129) is higher than the pressing force with which the wheels (82) of the wheel groups (72, 80, 81, 92), which are formed on the first chassis part (87) for contacting the first front face (77) of the conveying band (6), are pressed on to the first front face (77) of the conveying band (6).

9. Welding carriage according to any one of the preceding claims,
**characterized in that** at least or exactly one handle part (74) is provided for re-positioning at least one element of the drive device (15) and at least one wheel of the first chassis part (87) and preferably of the whole chassis part (87),
wherein the drive device can be re-positioned independently of a movement of a handle part (74) relative to the guide-support structure (87).

10. Welding carriage according to any one of the preceding claims,
**characterized in that**
the longitudinal direction of the welding carriage (1) extends in the transport direction and the width direction of the welding carriage (1) extends orthogonally to the longitudinal direction of the conveying band (6),
wherein the drive device (15) is mounted such that it is linearly displaceable in the width direction F.

11. Welding carriage according to any one of the preceding claims,
**characterized in that** the drive device (15) has at least one motor (86) and a force transmission element (85) that can be brought into contact with the conveying band (6),
and a motor decoupling device is implemented for repositioning at least one element, in particular the force transmission element (85), of the drive device (15),
wherein by means of the motor decoupling device, in at least one relative position between the first wheel group (72) and the second wheel group (77), in particular in an operating state, at least the one element of the drive device (15) can be re-positioned in such a way that a movement of the welding carriage (1) along the conveying band (6) can be decoupled from an operation of the drive device (15), in particular the force transmission element is spaced apart from the conveying band (6),
wherein the longitudinal direction of the welding carriage (1) extends in the transport direction and
the width direction of the welding carriage (1) extends orthogonally to the longitudinal direction of the conveying band (6),
wherein the drive device (15) is mounted such that it is linearly displaceable in the width direction F and
a coupling and decoupling device (70) is provided for coupling the chassis (4) and the drive device (15) to the conveying band (6) and for decoupling the chassis (4) and the drive device (15) from the conveying band (6),
wherein the coupling and decoupling device (70) has a deflection arrangement (71) for the simultaneous repositioning of at least one element of the drive device (15) and at least one wheel (73) of the at least one wheel group of the chassis (4).

## Revendications

1. Dispositif de soudage orbital,
comprenant au moins
un train de roulement (4) destiné à être couplé à une bande de guidage (6),
dans lequel le train de roulement (4) comprend une première partie de train de roulement (87) et une deuxième partie de train de roulement (97), dans lequel la première partie de train de roulement (87) et la deuxième partie de train de roulement (97) sont espacées l'une de l'autre de manière orthogonale par rapport à la direction de transport du train de roulement (4),
la première partie de train de roulement (87) présente deux groupes de roues (72, 81) avec respectivement plusieurs roues (82, 83, 84) et la deuxième partie de train de roulement (97) présente deux groupes de roues (80, 92) avec respectivement plusieurs roues (82, 83, 84), dans lequel la première partie de train de roulement (87) peut être repositionnée et la deuxième partie de train de roulement (97) est solidaire du dispositif,
dans lequel un système d'entraînement (15) est disposé au niveau de la première partie de train de roulement (87), dans lequel le système d'entraînement (15) soumis à l'action d'une force de ressort dans un état de fonctionnement peut être pressé contre un premier côté frontal (77) de la bande de guidage (6),
**caractérisé en ce que**
des éléments de levier (130) sont prévus, dans lequel chaque élément de levier est relié à un axe de pivotement (132) respectivement au niveau d'une première extrémité côté longitudinal,
trois roues (82, 83, 84) sont disposées au niveau de chaque élément de levier (130), dans lequel respectivement une roue (82) servant à établir un contact avec une surface frontale (77, 129) de la bande de guidage (6), respectivement une roue (84) servant à établir un contact avec une surface (78) extérieure de la bande de guidage (6) et respectivement une roue (83) servant à établir un contact avec la surface située à l'intérieur de la bande de guidage (6) est disposée,
dans lequel les éléments de levier (130) avec les roues (82, 83, 84) respectivement disposées au niveau de ces derniers peuvent être positionnés respectivement dans plusieurs positions pour adapter le train de roulement (4) à différents diamètres de bande de guidage,
dans lequel les roues (82, 83, 84) de chaque groupe de roues (72, 80, 81, 92) sont disposées respectivement au niveau d'un élément d'orientation (142), dans lequel l'élément d'orientation est disposé de manière à pouvoir pivoter au niveau du corps de base (131) de l'élément de levier (130).

2. Dispositif de soudage selon la revendication 1,
**caractérisé en ce que**
la position des éléments de levier (130) peut être réglée respectivement progressivement et peut être bloquée au moyen de moyens de blocage (138) respectivement dans l'orientation réglée.

3. Dispositif de soudage selon la revendication 1,
**caractérisé en ce que**
sont prévus des moyens de positionnement (140), en particulier des éléments à complémentarité de forme, servant à positionner par palier et par complémentarité de forme les éléments de levier (130) dans des positions prédéfinies, dans lequel chaque élément de levier (130) peut être positionné au moins dans deux positions différentes l'une de l'autre, en particulier dans trois ou au moins trois positions différentes les unes des autres.

4. Dispositif de soudage selon la revendication 1,
**caractérisé en ce que**
l'élément d'orientation (142) et le corps de base (131) de l'élément de levier (130) réalisent un moyen de limitation (146) servant à limiter le déplacement par pivotement de l'élément d'orientation (142) par rapport à l'élément de levier (130).

5. Dispositif de soudage selon l'une quelconque des revendications précédentes,
**caractérisé en ce que**
au moins la multitude des roues (83, 84) de chaque groupe de roues (72, 80, 81, 92) sont réalisées sous la forme de roulettes montées de manière à pouvoir tourner, de cylindres ou de bagues, en particulier de roulements à billes.

6. Dispositif de soudage selon l'une quelconque des revendications précédentes,
**caractérisé en ce que**
un système d'accouplement et de désaccouplement (70) est prévu pour repositionner la première partie de train de roulement (87) par rapport à la deuxième partie de train de roulement (97), dans lequel la première partie de train de roulement (87) peut être disposée dans une position de fonctionnement au moyen du système d'accouplement et de désaccouplement (70) et dans lequel la première partie de train de roulement (87) peut être disposée dans une position de montage/démontage au moyen du système d'accouplement et de désaccouplement (70), dans lequel la première partie de train de roulement (87) est tenue à une distance par rapport à la deuxième partie de train de roulement (97) plus proche dans la position de fonctionnement que dans la position de montage/démontage.

7. Dispositif de soudage selon la revendication 6,
**caractérisé en ce que**
le système d'accouplement et de désaccouplement (70) présente un ensemble de déviation (71) servant à repositionner dans le même temps au moins un élément du système d'entraînement (15) et au moins une roue (73) d'au moins un groupe de roues du train de roulement (4).

8. Dispositif de soudage selon l'une quelconque des revendications précédentes,
**caractérisé en ce que**
un système d'entraînement (15) est disposé au niveau de la première partie de train de roulement (87), dans lequel le système d'entraînement (15) soumis à l'action d'une force de ressort dans un état de fonctionnement peut être pressé contre un premier côté frontal (77) de la bande de guidage (6) et dans lequel dans l'état de fonctionnement, du fait de l'application de force de ressort, respectivement au moins une roue (82) des groupes de roues (72, 80, 81, 92) disposés au niveau de la deuxième partie de train de roulement (97) est pressée au niveau du deuxième côté frontal (129) de la bande de guidage (6), dans lequel la force de pression, avec laquelle les deux roues (82) de la deuxième partie de train de roulement (97) sont pressées contre le deuxième côté frontal (129), est supérieure à la force de pression, avec laquelle les roues (82), réalisées pour établir un contact avec le premier côté frontal (77) de la bande de guidage (6) des groupes de roues (72, 80, 81 92) disposés au niveau de la première partie de train de roulement (87) sont pressés contre le premier côté frontal (77) de la bande de guidage (6).

9. Dispositif de soudage selon l'une quelconque des revendications précédentes,
**caractérisé en ce qu'**au moins ou précisément une partie de préhension (74) est prévue pour repositionner au moins un élément du système d'entraînement (15) et au moins une roue de la première partie de train de roulement (87) et de manière préférée de l'ensemble de la partie de train de roulement (87),
dans lequel le système d'entraînement peut être repositionné par rapport à la structure d'appui d'acheminement (87) indépendamment d'un déplacement d'une partie de poignée (74).

10. Dispositif de soudage selon l'une quelconque des revendications précédentes,
**caractérisé en ce que**
le sens longitudinal du dispositif de soudage (1) s'étend dans la direction de transport et le sens de la largeur du dispositif de soudage (1) s'étend de manière orthogonale par rapport au sens longitudinal de la bande de guidage (6),
dans lequel le système d'entraînement (15) est monté de manière à pouvoir coulisser linéairement dans le sens de la largeur F.

11. Dispositif de soudage selon l'une quelconque des revendications précédentes,
**caractérisé en ce que**
le système d'entraînement (15) présente au moins un moteur (86) et élément de transmission de force (85) pouvant être amené en contact avec la bande de guidage (6),
et un système de couplage de moteur est réalisé pour repositionner au moins un élément, en particulier l'élément de transmission de force (85), du système d'entraînement (15),
dans lequel peut être repositionné par le système de découplage de moteur dans au moins une position relative entre le premier groupe de roues (72) et le deuxième groupe de roues (77), en particulier dans un état de fonctionnement, au moins un élément du système d'entraînement (15) de telle manière qu'un déplacement du dispositif de soudage (1) le long de la bande de guidage (6) peut être découplé d'un fonctionnement du système d'entraînement (15), en particulier l'élément de transmission de force est espacé de la bande de guidage (6),
dans lequel le sens longitudinal du dispositif de soudage (1) s'étend dans la direction de transport et le sens de la largeur du dispositif de soudage (1) s'étend de manière orthogonale par rapport au sens longitudinal de la bande de guidage (6),
dans lequel le système d'entraînement (15) est monté de manière à pouvoir être coulissé linéairement dans le sens de la largeur F et
un système d'accouplement et de désaccouplement (70) est prévu pour accoupler le train de roulement (4) et le système d'entraînement (15) à la bande de guidage (6) et pour désaccoupler le train de roulement (4) et le système d'entraînement (15) de la bande de guidage (6),
dans lequel le système d'accouplement et de désaccouplement (70) présente un ensemble de déviation (71) servant à repositionner dans le même temps au moins un élément du système d'entraînement (15) et d'au moins une roue (73) d'au moins un groupe de roues du train de roulement (4).
